# EUROPÄISCHE PATENTSCHRIFT

(11) **EP 3 663 875 B1**
(45) Veröffentlichungstag und Bekanntmachung des Hinweises auf die Patenterteilung: **28.04.2021**
(21) Anmeldenummer: 19211123.5
(22) Anmeldetag: 25.11.2019
(51) Int. Cl.: G05B 19/042, G06F 8/76, G05B 19/05

(54) **VERFAHREN ZUM ERZEUGEN EINER GRAFISCHEN DARSTELLUNG EINER SIGNALVERARBEITUNGSFUNKTIONALITÄT**
METHOD FOR GENERATING A GRAPHICAL REPRESENTATION OF A SIGNAL PROCESSING FUNCTIONALITY
PROCÉDÉ DE GÉNÉRATION D'UNE REPRÉSENTATION GRAPHIQUE D'UNE FONCTIONNALITÉ DE TRAITEMENT DU SIGNAL

(30) Priorität: 03.12.2018 BE 201805849
(43) Veröffentlichungstag der Anmeldung: 10.06.2020
(73) Patentinhaber: Phoenix Contact GmbH & Co.KG, 32825 Blomberg (DE)
(72) Erfinder: Bossek, Björn, 31812 Bad Pyrmont (DE); Gregorius, Carsten, 31812 Bad Pyrmont (DE); Rahlves, Lutz, 30853 Langenhagen (DE)
(74) Vertreter: Blumbach · Zinngrebe Patentanwälte PartG mbB

(56) Entgegenhaltungen:
- WO-A1-2018/122660
- US-A1- 2014 358 817

## Beschreibung

Mit zunehmender Verbreitung und Komplexität von automatisierten Prozessen werden hierfür vorgesehenen Automatisierungssysteme sowohl für sichere (safe), als auch für nicht sichere (non-safe) Anwendungen mittels computergestützter Planung- und Projektierungswerkzeugen, sogenannter Engineeringtools, programmiert bzw. konfiguriert. Solche Engineeringtools ermöglichen in der Regel eine einfachere und übersichtlichere Erzeugung eines lauffähigen Anwendungsprogramms und anschließende Konfigurierung, einschließlich einer damit verbunden Parametrierung, und häufig auch Inbetriebnahme von Automatisierungssystemen. Dies erfolgt in der Regel unter Nutzung und Einbindung einer grafischen Benutzeroberfläche, so dass die Engineeringtools also eingerichtet sind, die für eine jeweilige Anwendung umzusetzende Signalverarbeitungsfunktionalität, d.h. letztlich das zu erzeugende und nach Konfiguration abzuarbeitende, lauffähige Anwendungsprogramm, auf einer grafischen Benutzeroberfläche funktionell, d.h. mittels bereitgestellten und/oder ausgewählten Funktionsbausteinen und weiteren Bausteinen grafisch darzustellen und zweckmäßig auch eine grafische Bedienbarkeit bereitzustellen. Die mit derartigen Engineeringtools programmierbaren bzw. konfigurierbaren Automatisierungssysteme umfassen folglich zumindest eine, speicherprogrammierbare Steuerungseinrichtung (SPS, englisch: Programmable Logic Controller, PLC), nachfolgend der Einfachheit halber als Steuerungseinrichtung bezeichnet.

Die grafische Darstellung einer Signalverarbeitungsfunktionalität umfasst in der Regel zweckmäßig auch weitere Bausteine, wie insbesondere Anschlussbausteine, welche jeweilige an die Eingangsseite und Ausgangsseite der Signalverarbeitungsfunktionalität gekoppelte physikalische Schnittstellen, wie beispielsweise elektrische Schraubklemmen in deren Funktionalität repräsentieren, an welchen die mittels der Signalverarbeitungsfunktionalität zu verarbeitenden Eingangssignale angelegt bzw. die Ausgangssignale am Ende der Signalverarbeitungsfunktionalität bereitgestellt und folglich weiterverwendet werden können.

Den zur Programmierung und Konfiguration einsetzbaren Bausteinen sind hierbei jeweilige Funktionalitäten oder Teilfunktionalitäten, nachfolgend der Vereinheitlichung wegen auch als Signalverarbeitungsteilfunktionalitäten, welche auch Steuerungsfunktionalitäten enthalten können, bezeichnet, sowie spezifische grafische Symbole oder Darstellungen einander zugeordnet und in einer oder mehreren Bibliotheken bzw. dortigen Speicherbereichen abgelegt, auf welche das Engineeringtool zugreifen kann oder den Zugriff ermöglicht. Häufig können derartige Bausteine auch neu erschaffen und/oder verändert werden, z.B. auch durch Verknüpfung mehrerer Bausteine, und mit entsprechend neuen oder veränderten Funktionalitäten oder Teilfunktionalitäten sowie spezifischen grafischen Symbolen oder Darstellungen neu abgelegt werden.

Die Auswahl und zweckmäßig auch weitere Bedienbarkeit eines Bausteins für das zu erstellende Anwendungsprogramm der zu konfigurierenden Steuereinrichtung erfolgt somit heutzutage in der Regel mittels einer grafischen Benutzeroberfläche. Je nach Anwendung kann hiermit auch der ausgewählte Baustein z.B. mit anderen Bausteinen verknüpft werden und/oder eine Belegung mit Ein- und/oder Ausgangssignalen durch entsprechende grafische Anbindung von Anschlussbausteinen an Funktionsbausteinen festgelegt werden.

In an und für sich bekannter Art und Weise kann die mittels der grafischen Benutzeroberfläche erzeugte grafische Darstellung einer Signalverarbeitungsfunktionalität bzw. eines zu erstellenden, nach Konfiguration abzuarbeitenden Anwendungsprogramms anschließend mittels der grafischen Benutzeroberfläche auch für die Konfiguration des Automatisierungssystems selbst, d.h. zumindest einer Steuereinrichtung herangezogen werden. Die Funktionsbausteine stellen somit jeweils eine bestimmte eigenständige Funktion bereit, die Eingangssignale auswerten, um Ausgangssignale zu erzeugen, wobei die Funktionsbausteine in der Regel mittels der grafischen Benutzeroberfläche jeweils eigenständig auswählbar, ausführbar und/oder aktivierbar sind.

Ein mittels der grafischen Benutzeroberfläche bereitgestellter und/oder ausgewählter Funktionsbaustein kann zum Beispiel auch einer Hardwarekomponente entsprechen, auf der eine Steuerungslogik vorhanden ist, welche den Funktionsbaustein bzw. dessen Teilfunktionalität bereitstellt.

Die für eine anwendungsbezogene Konfiguration ausgewählten bzw. zu verwendenden Funktionsbausteine bilden somit jeweils eine wesentliche Grundlage für eine bestimmte Signalverarbeitungsfunktionalität des zu erstellenden, lauffähigen Anwendungsprogramms einschl. der grafisch funktionellen Darstellung dieser Signalverarbeitungsfunktionalität bzw. des nach Konfiguration abzuarbeitenden Anwendungsprogramms und sind zweckmäßig auch zur Laufzeit des Anwendungsprogramms zur Statusanzeige und weiteren Konfiguration verwendbar.

Ein Problem bei derartigen Engineeringtools ist hierbei, dass diese in der Regel einer Weiterentwicklung unterworfen sind und/oder unterschiedlichen Standards bzw. Formaten entsprechen und sich folglich auch die den jeweiligen Bausteinen innewohnenden Funktionalitäten ändern können oder anders sind, wie auch ergänzend oder alternativ die spezifischen grafischen Symbole oder Darstellungen von Bausteinen.

Soll folglich eine einmal zusammengestellte Signalverarbeitungsfunktionalität von einem Entwicklungsstand auf einen anderen Entwicklungsstand umgesetzt werden, basierend auf welchem mit einem hierfür eingerichteten Engineeringtool auf einer grafischen Benutzeroberfläche grafisch dargestellte Funktionsbausteine und zweckmäßig weitere Bausteine mittels der grafischen Benutzeroberfläche für die Konfiguration einer Steuerungseinrichtung herangezogen werden können, wobei lediglich die grafische Darstellung der Signalverarbeitungsfunktionalität vorliegt, die es umzusetzen gilt in die grafische Darstellung derselben Signalverarbeitungsfunktionalität unter Verwendung von Funktionsbausteinen und zweckmäßig weiteren Bausteinen, welche dann auch wieder für die Konfiguration der Steuerungseinrichtung einsetzbar sind, ist dies in der Regel äußerst zeit- und kostenintensiv und in der Regel nur manuell durch entsprechende Kenntnis der gesamten, durch die grafische Darstellung repräsentierte, tatsächlich zu verwirklichende Signalverarbeitungsfunktionalität und also des nach Konfiguration abzuarbeitenden Anwendungsprogramms und/oder mittels Tryand-Error Versuche eines Anwenders möglich.

Ein Engineering-Tool zum Konfigurieren eines Automatisierungssystems ist zum Beispiel aus der Druckschrift WO 2018/122660 bekannt.

Eine Aufgabe der Erfindung besteht folglich darin, eine grafische Darstellung einer Signalverarbeitungsfunktionalität, die auf grafisch dargestellten Funktionsbausteinen und gegebenenfalls weiteren Bausteinen beruht, welche an und für sich für ein vorbestimmtes Engineering-Tool weder für die grafische Programmierung noch die Konfiguration von Automatisierungssystemen einsetzbar sind, automatisch in eine grafische Darstellung derselben Signalverarbeitungsfunktionalität umzusetzen, wobei diese grafische Darstellung auf grafisch dargestellten Funktionsbausteinen und gegebenenfalls weiteren Bausteinen basiert, welche in dem vorgenannten Engineering-Tool zur Erzeugung eines lauffähigen Anwendungsprogramms und entsprechenden Konfiguration von Automatisierungssystemen einsetzbar sind.

Die Lösung der Aufgabe ist insbesondere durch ein Verfahren mit den Merkmalen nach Anspruch 1 dargestellt, wobei vorteilhafte und zweckmäßige Ausführungen Gegenstand der Unteransprüche sind.

Die Erfindung schlägt folglich ein Verfahren zum Erzeugen einer grafischen Darstellung einer Signalverarbeitungsfunktionalität auf einer grafischen Benutzeroberfläche vor, und zwar unter Verwendung einer Mehrzahl von auf einem ersten Format basierenden Funktionsbausteinen mit jeweils zumindest einem Signaleingang und einem Signalausgang zur Vorgabe jeweiliger Signalverarbeitungsteilfunktionalitäten, und zwar basierend auf einer Mehrzahl von auf einem zweiten Format basierenden Funktionsbausteinen mit jeweils zumindest einem Signaleingang und einem Signalausgang zur Vorgabe jeweiliger Signalverarbeitungsteilfunktionalitäten, wobei die auf dem ersten Format basierenden Funktionsbausteine bei der Erzeugung eines lauffähigen Anwendungsprogramms und der Konfiguration einer Steuerungseinrichtung mittels eines Konfigurationsprogramms zum Einsatz kommen können und das Konfigurationsprogramm auf einer Datenverarbeitungsanlage ausführbar ist und dazu eingerichtet ist, auf einer mit der Datenverarbeitungsanlage verbundenen Anzeigeeinrichtung die grafische Benutzeroberfläche darzustellen, auf welcher eine Mehrzahl von auf diesem ersten Format basierenden Funktionsbausteinen bereitgestellt werden und mittels der grafischen Benutzeroberfläche für die Erstellung des Anwendungsprogramms und Konfiguration der Steuerungseinrichtung herangezogen werden können.

Im Einzelnen sieht hierbei die Lösung nach der Erfindung vor, dass basierend auf einem optisch entlang einer ersten Einscannrichtung und entlang einer anderen, zweiten Einscannrichtung eingescannten, zuvor bereitgestellten Abbild einer grafischen Darstellung der Signalverarbeitungsfunktionalität mit einer Mehrzahl von auf dem zweiten Format basierenden Funktionsbausteinen, eine Bilderkennung des durch den ersten Einscannvorgang erhaltenen Bildes und ein hierauf basierendes Erzeugen eines ersten, Signalverarbeitungsteilfunktionalitäten repräsentierenden Datensatzes sowie eine Bilderkennung des durch den zweiten Einscannvorgang erhaltenen Bildes und hierauf basierendes Erzeugen eines zweiten, Signalverarbeitungsteilfunktionalitäten repräsentierenden Datensatzes durchgeführt wird.

Bei jeder dieser Bilderkennungen wird ein Vergleich mit in einer Bibliothek abgelegten bekannten grafischen Darstellungen bzw. Symbolen von auf dem zweiten Format basierenden und in deren Signalverarbeitungsteilfunktionalitäten dem Konfigurationsprogramm bekannten Funktionsbausteinen durchgeführt und bei jedem Erkennen einer solchen, in der Bibliothek abgelegten bekannten grafischen Darstellung, wird die entsprechend dieser grafischen Darstellung bekannte Signalverarbeitungsteilfunktionalität für die auf der Bilderkennung basierenden Erzeugung des jeweiligen Datensatzes herangezogen.
Basierend auf dem erzeugten ersten Datensatz wird anschließend ein erster Zwischencode und basierend auf dem erzeugten zweiten Datensatz ein zweiter Zwischencode generiert, welche daraufhin miteinander verglichen werden. Sofern der Schritt des Vergleichens zu dem Ergebnis einer Identität des ersten Zwischencodes und des zweiten Zwischencode führt, wird durch das Konfigurationsprogramm jeweils wenigstens ein auf dem ersten Format basierender Funktionsbaustein für jeweils wenigstens eine bei der Erzeugung herangezogene bekannte Signalverarbeitungsteilfunktionalität automatisch ausgewählt und die Signalverarbeitungsfunktionalität auf der grafischen Benutzeroberfläche grafisch dargestellt, wobei erkannte, auf dem zweiten Format basierende Funktionsbausteine durch ausgewählte, auf dem ersten Format basierende Funktionsbausteine ersetzt werden.

Insbesondere, wenn alle auf dem zweiten Format basierende Funktionsbausteine erkannt und durch ausgewählte, auf dem ersten Format basierende Funktionsbausteine ersetzt, kann folglich auch ein lauffähiges Anwendungsprogramm erzeugt und dieses für die Konfiguration der Steuerungseinrichtung herangezogen werden.

Die Lösung der Aufgabe spiegelt sich auch in dem Speichermedium gemäß Anspruch 9 wieder, mit einem darauf gespeicherten Softwareprogramm, welches zur Umsetzung eben solcher grafischen Darstellungen, welche auf unterschiedlichen Funktionsbausteinen beruhen, geeignet ist.
Ein solches Softwareprogramm ist folglich zur Durchführung des erfindungsgemäßen Verfahrens auf der Datenverarbeitungsanlage ausführbar und dann zum Zusammenwirken mit dem auf der Datenverarbeitungsanlage ausführbaren und eingerichteten Konfigurationsprogramm zumindest basierend auf den durch die Einscannvorgänge erhaltenen Bildern eingerichtet.

Weitere Vorteile und Merkmale und/oder Ausführungsbeispiele der Erfindung werden bezugnehmend auf die nachfolgende Beschreibung anhand der beigefügten Zeichnungen offensichtlich. In den Zeichnungen zeigen:
Fig. 1, stark vereinfacht ein Abbild einer grafischen Darstellung einer Signalverarbeitungsfunktionalität mit einer Mehrzahl von verknüpften, auf einem zweiten, d.h. umzusetzenden Format basierenden Funktionsbausteinen einschließlich daran angebundenen Anschlussbausteinen,
Fig. 2, stark vereinfacht eine Prinzipdarstellung eines optischen Einscannvorgangs, des in Fig. 1 dargestellten Abbildes entlang einer ersten Einscannrichtung,
Fig. 3, stark vereinfacht eine schematische Ansicht eines nachfolgenden, zur Verarbeitung des mit dem Einscannen entlang der ersten Einscannrichtung erhaltenen Bildes notwendigen Verfahrensabschnitts,
Fig. 4, stark vereinfacht eine Prinzipskizze eines optischen Einscannvorgangs, der in Fig. 1 dargestellten grafischen Darstellung entlang einer zur ersten Einscannrichtung anderen, zweiten Einscannrichtung,
Fig. 5, stark vereinfacht eine der Fig. 3 entsprechende schematische Ansicht, jedoch zur Verarbeitung des mit dem Einscannen entlang der zweiten Einscannrichtung erhaltenen Bildes,
Fig. 6, stark vereinfacht eine Prinzipdarstellung eines Vergleichs der durch die beiden Verfahrensabschnitte gemäß Figuren 3 und 5 erhaltenen Ergebnisse,

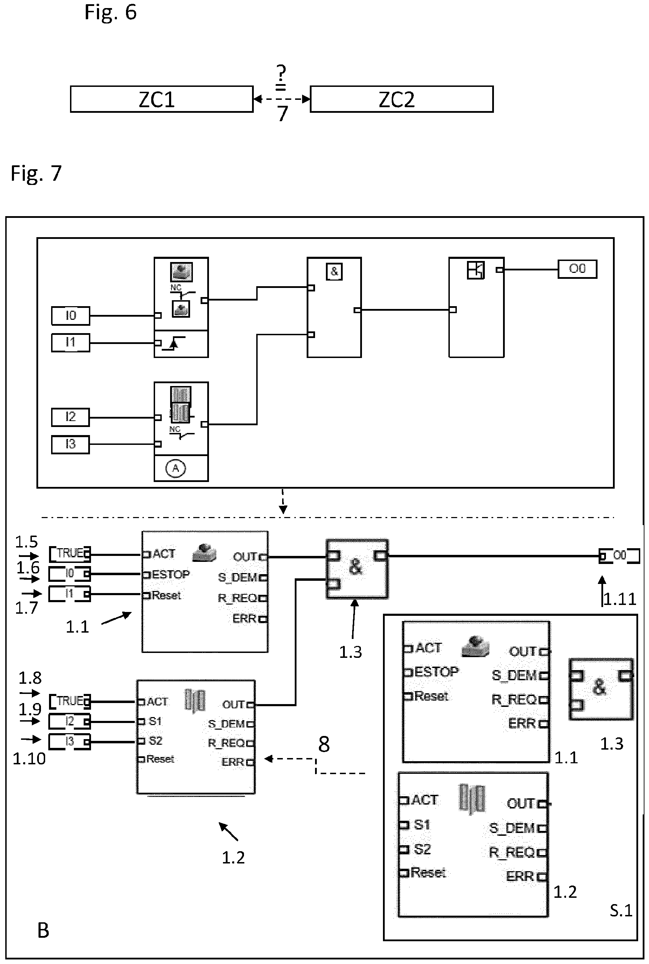

Fig. 7, stark vereinfacht eine schematische Ansicht eines in Abhängigkeit des gemäß Fig. 6 gewonnenen Vergleichsergebnisses nachfolgenden Verfahrensabschnitts zum letztendlichen Erzeugen einer grafischen Darstellung der Signalverarbeitungsfunktionalität entsprechend des eingescannten Abbildes, jedoch auf einer grafischen Benutzeroberfläche, und zwar unter Verwendung einer Mehrzahl von auf dem ersten Format basierenden Funktionsbausteinen, d.h. allgemein gesprochen zur Umsetzung der für die grafische Darstellung einer Signalverarbeitungsfunktionalität herangezogenen Funktionsbausteine von einem für ein Engineeringtool zur Konfiguration nichteinsetzbaren Format bzw. entsprechenden Standard auf das für das Engineeringtool zur Konfiguration einsetzbare Format bzw. den entsprechenden Standard,
   und
Fig. 8, stark vereinfacht eine schematische, beispielhafte grafische Darstellung der Signalverarbeitungsfunktionalität, bei einer nicht vollständig durchführbaren Umsetzung.

Nachfolgend wird auf die Figuren Bezug genommen, anhand derer verschiedene Vorteile, Merkmale ersichtlich und bevorzugten Ausführungsbeispiele näher erläutert werden.

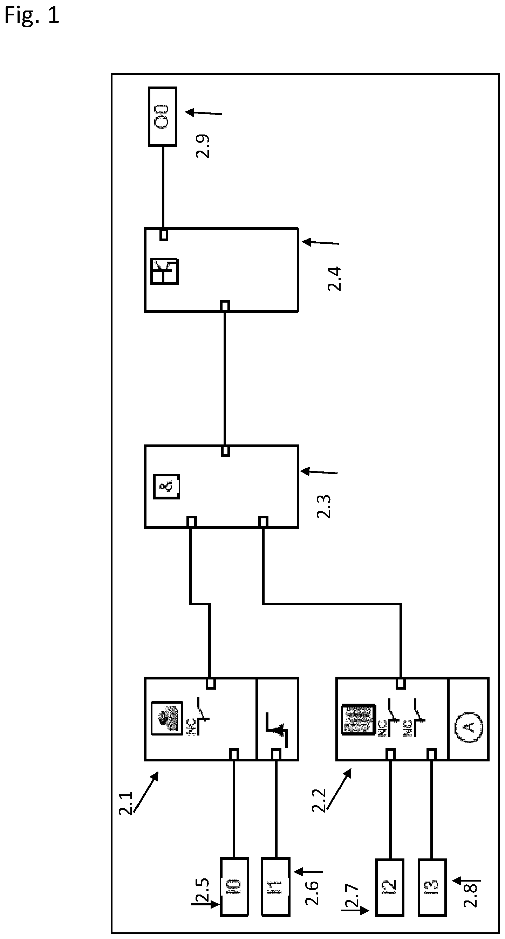

Fig. 1 zeigt beispielhaft ein Abbild einer grafischen Darstellung einer Signalverarbeitungsfunktionalität und zwar unter Verwendung einer Mehrzahl von auf einem vorbestimmten Format basierenden Funktionsbausteinen 2.1, 2.2, 2.3 und 2.4 mit jeweils zumindest einem Signaleingang und einem Signalausgang zur Vorgabe jeweiliger Funktionalitäten bzw. Signalverarbeitungsteilfunktionalitäten.

Für eine konsistente Begrifflichkeit wird dieses vorbestimmte Format nachfolgend in der Beschreibung sowie in den Ansprüchen als zweites Format bezeichnet.

Wie in der Beschreibungseinleitung beschrieben, können solche, auf dem zweiten Format basierende Funktionsbausteine und in der Regel auch weitere auf diesem zweiten Format basierende Bausteine, wie z.B. die in Fig. 1 dargestellten Anschlussbausteine 2.5, 2.6, 2.7 und 2.8, welche jeweilige an die an die Eingangsseite der Signalverarbeitungsfunktionalität gekoppelte physikalische Schnittstellen in deren Funktionalität repräsentieren, sowie der Anschlussbaustein 2.9, welcher eine an die Ausgangsseite der Signalverarbeitungsfunktionalität gekoppelte physikalische Schnittstelle in deren Funktionalität repräsentiert, heutzutage mittels für dieses zweite Format gleichermaßen bestimmte Engineeringtools zur Erstellung eines Anwendungsprogramms und anschließenden Konfigurierung, einschließlich einer damit verbunden Parametrierung, und häufig auch Inbetriebnahme von Automatisierungssystemen, d.h. von zumindest einer Steuerungseinrichtung eingesetzt werden. Das wie in Fig. 1 gezeigte Abbild einer grafischen Darstellung der Signalverarbeitungsfunktionalität repräsentiert somit beispielhaft eine, mittels den entsprechend bereitgestellten und/oder ausgewählten Funktionsbausteinen und zweckmäßig weiteren Bausteinen ursprünglich auf einer grafischen Benutzeroberfläche funktionell grafisch dargestellte, für eine vorbestimmte Anwendung umzusetzende Signalverarbeitungsfunktionalität, d.h. letztlich das nach Konfiguration abzuarbeitende Anwendungsprogramm.

Solche Engineeringtools zur Konfigurierung einer Steuereinrichtung, welche unter Nutzung und Einbindung einer grafischen Benutzeroberfläche eingerichtet sind, die für eine jeweilige Anwendung umzusetzende Signalverarbeitungsfunktionalität, d.h. letztlich das nach Erzeugung und Konfiguration abzuarbeitende Anwendungsprogramm, auf einer grafischen Benutzeroberfläche funktionell, d.h. mittels bereitgestellten und/oder ausgewählten, auf einem vorbestimmten Format basierenden Funktionsbausteinen und weiteren Bausteinen grafisch darzustellen und somit zweckmäßig auch eine grafische Bedienbarkeit bereitzustellen, umfassen somit zumindest ein Konfigurationsprogramm, welches auf einer Datenverarbeitungsanlage ausführbar ist und dazu eingerichtet ist, auf einer mit der Datenverarbeitungsanlage verbundenen Anzeigeeinrichtung eine grafische Benutzeroberfläche darzustellen, auf welcher eine Mehrzahl von auf diesem bestimmten Format basierenden Funktionsbausteinen und weiteren Bausteinen bereitgestellt werden und mittels der grafischen Benutzeroberfläche für die Konfiguration der Steuerungseinrichtung herangezogen werden können.

Mit anderen Worten können also z.B. auf dem zweiten Format basierende Funktionsbausteine folglich bei der Konfiguration einer Steuerungseinrichtung mittels eines Konfigurationsprogramms zum Einsatz kommen, das die auf diesem zweiten Format basierende Funktionsbausteine verarbeiten kann und auf einer Datenverarbeitungsanlage ausführbar und dazu eingerichtet ist, auf einer mit der Datenverarbeitungsanlage verbundenen Anzeigeeinrichtung eine grafische Benutzeroberfläche darzustellen, auf welcher eine Mehrzahl von auf diesem zweiten Format basierenden Funktionsbausteinen bereitgestellt werden und mittels der grafischen Benutzeroberfläche bis hin zur Konfiguration der Steuereinrichtung herangezogen werden können, so dass eine wie beispielhaft in Fig. 1 dargestellte grafische Darstellung der Signalverarbeitungsfunkionalität mittels dem somit dazu geeigneten Engineeringtool auf der grafischen Benutzeroberfläche darstellbar und in ein ausführbares Anwendungsprogramm wandelbar ist.

Alle die auf dem zweiten Format basierenden mittels dem somit dazu geeigneten Engineeringtool auf der grafischen Benutzeroberfläche grafisch dargestellten Funktionsbausteine, zweckmäßig auch weiteren Bausteine, insbesondere Anschlussbausteine, repräsentieren also in deren Gesamtheit für das dafür geeignete Engineeringtools und grafisch dargestellt die darin enthaltene Signalverarbeitungsfunktionalität bzw. das nach Wandelung in ein ausführbares und nach entsprechender Konfiguration abzuarbeitende Anwendungsprogramm und also insbesondere die damit repräsentierte
- Programmlogik, insbesondere als Programmcode und/oder grafische Logik,
- die HW-Konfiguration für den HW-Aufbau (HW=Hardware), einschließlich eventueller Bustopologien,
- die HW-Parametrierung, wie beispielsweise Testtakte und Filterzeiten,
- die Parameter von Funktionsbausteinen und/oder etwaige Kommentare, Betriebsmittelkennzeichen, I/O-Listen (Input/Output-Listen) etc..

Wird eine solche auf der grafischen Benutzeroberfläche wiedergegebene grafische Darstellung der Signalverarbeitungsfunkionalität mittels des Engineeringtools anschließend als Abbild ausgegeben, z.B. ausgedruckt, wird hierbei im Rahmen der Erfindung auch von einem sogenannten Projektausdruck gesprochen. Ein solches Abbild einer grafischen Darstellung bzw. ein solcher Projektausdruck kann z.B. auch als PDF-Dokument vorliegen.

Anhand eines solchen, wie bei Fig. 1 gezeigten Abbildes einer grafischen Darstellung einer Signalverarbeitungsfunktionalität mit einer Mehrzahl von zumindest Funktionsbausteinen, die alle dem zweiten Format basieren, wobei im dargestellten Beispiel zweckmäßig zusätzlich eingangs-, wie ausgangsseitig auf demselben Format basierende Anschlussbausteine in grafischer Darstellung angekoppelt sind, wird nachfolgend der erfindungsgemäße Weg einschließlich bevorzugter, im Rahmen der Erfindung liegende Ausführungsbeispiele beschrieben, d.h. zur Umsetzung dieses Abbildes einer grafischen Darstellung der Signalverarbeitungsfunktionalität in eine grafische Darstellung der Signalverarbeitungsfunktionalität auf einer grafischen Benutzeroberfläche mit jedoch einer Mehrzahl von zumindest Funktionsbausteinen, die auf einem anderen, vorbestimmten Format basieren und entsprechend bei der Konfiguration einer Steuerungseinrichtung mittels eines Konfigurationsprogramms zum Einsatz kommen können, das die auf diesem anderen, vorbestimmten Format basierenden Funktionsbausteine verarbeiten kann.

Für eine konsistente Begrifflichkeit wird dieses andere vorbestimmte Format nachfolgend in Beschreibung sowie in den Ansprüchen als erstes Format bezeichnet.

Die auf diesem anderen, vorbestimmten, d.h. dem ersten Format basierenden Funktionsbausteine und zweckmäßig weiteren Bausteine können folglich bei der Konfiguration einer Steuerungseinrichtung mittels eines Konfigurationsprogramms zum Einsatz kommen, welches auf einer Datenverarbeitungsanlage ausführbar ist und dazu eingerichtet ist, auf einer mit einer Datenverarbeitungsanlage verbundenen Anzeigeeinrichtung diese grafische Benutzeroberfläche darzustellen, auf welcher eine Mehrzahl von auf diesem ersten Format basierenden Funktionsbausteinen bereitgestellt werden und mittels der grafischen Benutzeroberfläche für die Erzeugung eines lauffähigen Anwendungsprogramms und der hierauf basierten Konfiguration der Steuerungseinrichtung herangezogen können.

Diese grafische Benutzeroberfläche stellt dabei eine Mehrzahl zumindest von Funktionsbausteinen, welche auf dem ersten Format basieren und jeweils zumindest einen Eingang für Eingangssignale und einen Ausgang für Ausgangssignale zur Vorgabe jeweiliger Signalverarbeitungsteilfunktionalitäten besitzen, bereit und ermöglicht es, die Funktionsbausteine jeweils mittels der grafischen Benutzeroberfläche auszuwählen, um sie für die Konfiguration z.B. einer Hardwarekomponente heranzuziehen. Dazu sind die bevorzugt sicheren Bausteine und deren Funktionalitäten z.B. in die grafische Programmieroberfläche der Konfigurationssoftware integriert, um in der Erstellung einer Sicherheitslogik, d.h. bei der Konfiguration einer Steuerungseinrichtung eine spezifische Sicherheitsfunktion zu realisieren. Die mittels der grafischen Benutzeroberfläche bereitgestellten und/oder ausgewählten Funktionsbausteine und zweckmäßig auch weiteren Bausteine haben z.B. jeweils eine Entsprechung in der Hardwarekomponente, auf der eine Steuerungslogik vorhanden ist, welche die entsprechenden Funktionsbausteine umfasst. Die bereitgestellten Funktionsbausteine und auch weiteren Bausteine können z.B. in einer Bibliothek oder einem jeweiligen Speicherbereich einer oder mehrerer Bibliotheken zusammengefasst sein. Um einen Funktionsbaustein zu aktivieren bzw. in die Steuerungslogik und/oder Signalverarbeitungsfunkionalität einzubeziehen, kann der entsprechende Funktionsbaustein z.B. mittels der grafischen Benutzeroberfläche ausgewählt werden, oder es kann ggf. auch vorgesehen sein, dass die Aktivierung nach dem Auswählen erfolgt. Insbesondere kann ein ausgewählter bzw. aktivierter Funktionsbaustein mittels der grafischen Benutzeroberfläche zur Parametrierung und/oder Verknüpfung mit anderen Funktionsbausteinen genutzt werden, so dass das Verhalten des oder der Funktionsbausteine in der Hardwarekomponente beeinflusst werden kann. Die Funktionsbausteine stellen jeweils eine bestimmte, eigenständige Funktion bereit, die auf Eingangssignale einwirken, um Ausgangssignale zu erzeugen, wobei die Funktionsbausteine zweckmäßig jeweils eigenständig ausführbar bzw. aktivierbar sind.

Zur entsprechenden Umsetzung einer grafischen Darstellung einer Signalverarbeitungsfunktionalität mit zumindest einer Mehrzahl von auf dem zweiten Format basierenden Funktionsbausteinen in eine grafische Darstellung einer Signalverarbeitungsfunktionalität unter Verwendung einer Mehrzahl von auf dem ersten Format basierenden Funktionsbausteinen mit jeweils zumindest einem Signaleingang und einem Signalausgang zur Vorgabe jeweiliger Signalverarbeitungsteilfunktionalitäten, d.h. insbesondere zur Erzeugung einer solchen umgesetzten grafischen Darstellung einer Signalverarbeitungsfunktionalität auf einer grafischen Benutzeroberfläche, wird zunächst ein Abbild einer grafischen Darstellung einer Signalverarbeitungsfunktionalität mit zumindest einer Mehrzahl von auf dem zweiten Format basierenden Funktionsbausteinen bereitgestellt, z.B. das in Fig. 1 beispielhaft gezeigte Abbild unter Verwendung der Funktionsbausteine 2.1, 2.2, 2.3 und 2.4 mit jeweils zumindest einem Signaleingang und einem Signalausgang zur Vorgabe jeweiliger Funktionalitäten bzw. Signalverarbeitungsteilfunktionalitäten. Zweckmäßig enthält dieses Abbild weitere auf dem zweiten Format basierende Bausteine, wie z.B. die in Fig. 1 dargestellten Anschlussbausteine 2.5, 2.6, 2.7, 2.8 und 2.9. Für die funktionelle Verschaltung sind ferner entsprechende, grafisch dargestellte Signalpfade bzw. Verknüpfung zwischen den Bausteinen enthalten.

Der Funktionsbaustein 2.1 repräsentiert hierbei als Signalverarbeitungsteilfunktionalität beispielsweise eine Notaus- bzw. Nothalt-Funktionalität, welche mit einer Parametrierungseigenschaft, beispielsweise einem zu überschreitendem Schwellwert belegt sein kann. Die entsprechend dem zweiten Format grafisch dargestellten, eingangsseitig angebundenen Anschlussbausteine sind mit 2.5 und 2.6 gekennzeichnet und zeigen an, dass gemäß Fig. 1 entsprechend ein Eingangssignal I0 an den oberen Eingang und ein Eingangssignal I1 an den unteren Eingang des Funktionsbausteins 2.1 anzulegen ist. Der Ausgang des Funktionsbausteins 2.1 ist gemäß Fig. 1 beispielsweise an einen ersten Eingang des Funktionsbausteins 2.3 gelegt, wobei der Funktionsbaustein 2.3 im vorliegenden Beispiel eine UND-Verknüpfungsfunktionalität repräsentiert. An den zweiten Eingang des Funktionsbausteins 2.3 ist der Ausgang des Funktionsbausteins 2.2 gelegt, der wiederum zwei Eingänge bereitstellt, an welche ein mit dem Bezugszeichen 2.7 belegtes Signal I2 anzulegen ist sowie ein mit dem Bezugszeichen 2.8 belegtes Signal I3. Der Ausgang des Funktionsbausteins 2.3 wiederum ist an den Eingang eines nachfolgenden Funktionsbausteins 2.4 gelegt, welcher im vorliegenden Beispiel z.B. die Signalverarbeitungsteilfunktionalität einer speziellen Transistorschaltung bereitstellt. Ein Ausgang des Funktionsbausteins 2.4 ist dann beispielsweise mit dem Anschlussbaustein 2.9 verbunden, an welchen im vorliegenden Fall ein Ausgangssignal O0 am Ende der grafisch dargestellten Signalverarbeitungsteilfunktionalität bereitgestellt und folglich weiterverwendet werden kann.

Gemäß der Erfindung wird ein solches Abbild einer grafischen Darstellung bzw. ein wie vorstehend erwähnter Projektausdruck, welcher z.B. ausgedruckt auf Papier oder als PDF-Datei oder auch als Bild-Datei, wie z.B. als JPG-Datei bereitgestellt wird, zunächst optisch für eine nachfolgende Bilderkennung eingescannt, d.h. optisch abgetastet, und zwar entlang wenigstens zwei unterschiedlichen Einscannrichtungen, insbesondere, um aus Sicherheitsgründen Einscannfehler soweit als möglich zu minimieren und/oder mögliche Fehlerquellen zweckmäßigerweise so früh als möglich zu detektieren. Wie eingangs beschrieben, handelt es sich bei den Anwendungen, für welche gattungsbildende Signalverarbeitungsfunktionalitäten umzusetzen sind, nicht nur um nicht sichere (non-safe) Anwendungen, sondern häufig und vorrangig auch um sichere (safe) Anwendungen, d.h. Anwendungen, die in deren Funktion sicher sein müssen.

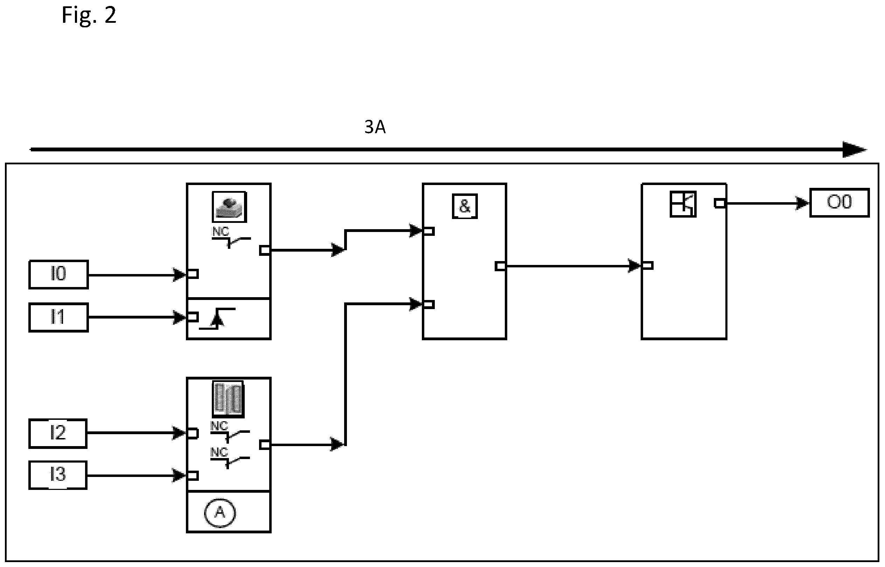

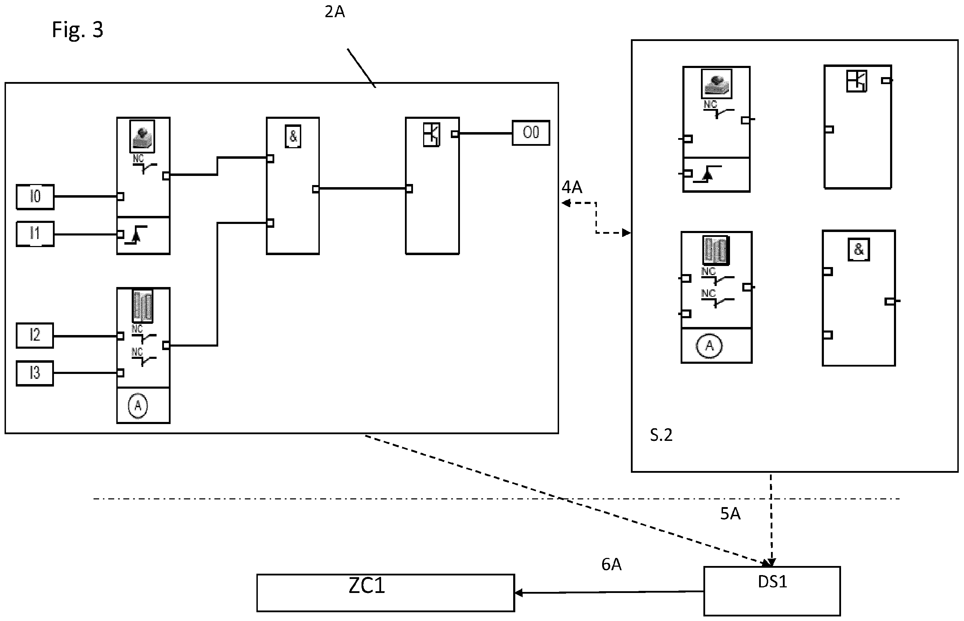

Fig.2 stellt nun stark vereinfacht das optische Einscannen des gemäß Fig. 1 bereitgestellten Abbildes entlang einer ersten Einscannrichtung 3A dar, beispielhaft von der Signaleingangsseite zur Signalausgangsseite, wobei insofern zur Veranschaulichung auch die in dem Abbild gemäß Fig. 1 dargestellten Signalpfade zur Veranschaulichung der Einscannrichtung bei Fig. 3 mit einem Pfeil entsprechend der Einscannrichtung belegt worden sind.

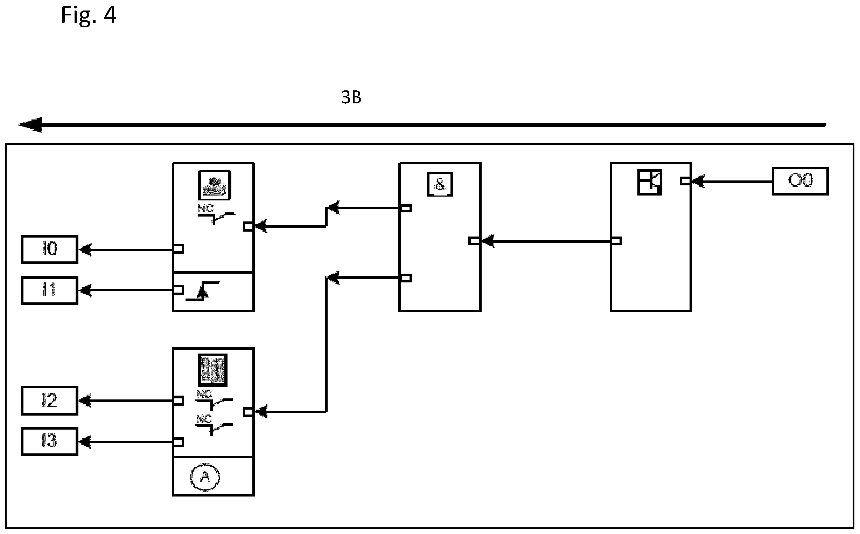

Fig.4 stellt einen weiteren Einscannvorgang 3B dar, jedoch in einer zur Fig. 2 dargestellten Einscannrichtung 3A anderen, zweiten Einscannrichtung 3B, beispielsweise von der Signalausgangsseite in Richtung zur Signaleingangsseite. Insofern sind die Signalpfade gemäß Fig. 1 zur Veranschaulichung bei Fig. 4 gleichermaßen mit Pfeil entlang dieser dortigen anderen Einscannrichtung belegt.

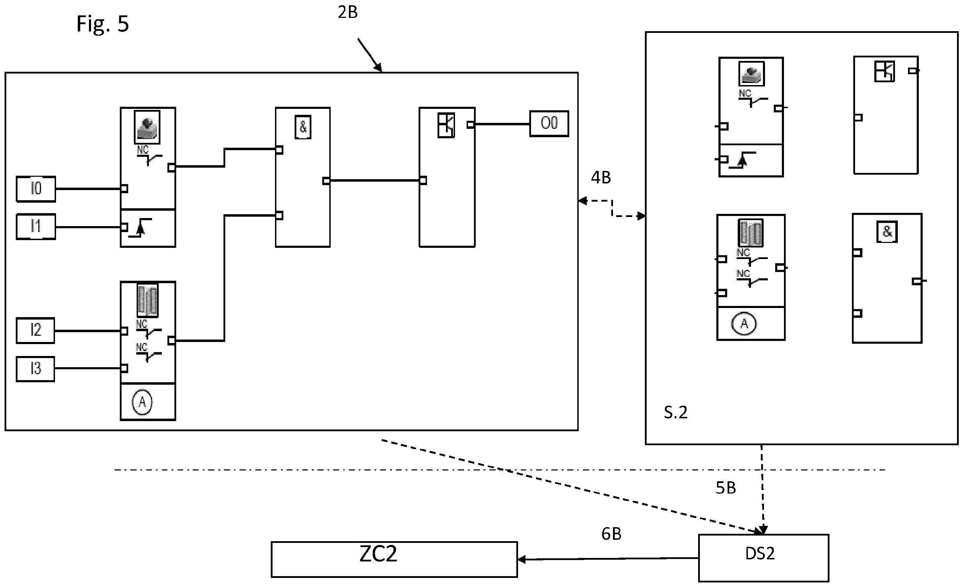

Die Figuren 3 und 5 zeigen in stark vereinfachter Ansicht einen zur Verarbeitung eines mit dem Einscannen entlang der ersten Einscannrichtung (Fig. 2) erhaltenen Bildes 2A nachfolgenden, notwendigen Verfahrensabschnitt bzw. einen zur Verarbeitung eines mit dem Einscannen entlang der zweiten Einscannrichtung (Fig. 4) erhaltenen Bildes 2B nachfolgenden, notwendigen Verfahrensabschnitt.

Die mit den Einscannvorgänge erhaltenen Bilder 2A und 2B können hierzu ferner unmittelbar beim Einscannen oder im Anschluss an das Einscannen zur weiteren Verarbeitung in eine Datenverarbeitungslage importiert, zweckmäßig in die, auf welcher das Konfigurationsprogramms, mit welchem die auf dem ersten Format basierenden Bausteine bei der Konfiguration einer Steuerungseinrichtung zum Einsatz kommen können, ausführbar und dazu eingerichtet ist, auf der mit der Datenverarbeitungsanlage verbundenen Anzeigeeinrichtung die grafische Benutzeroberfläche darzustellen.

Die weitere Verarbeitung umfasst als jeweils nachfolgenden Verfahrensabschnitt dann gemäß Fig. 3 das Durchführen einer Bilderkennung 4A des durch den ersten Einscannvorgang erhaltenen Bildes 2A, ein hierauf basierendes Erzeugen 5A eines ersten, Signalverarbeitungsteilfunktionalitäten repräsentierenden Datensatzes DS1 und das Generieren 6A eines ersten Zwischencodes ZC1 basierend auf dem erzeugten ersten Datensatz DS1 sowie in entsprechender Weise gemäß Fig. 5 das Durchführen einer Bilderkennung 4B des durch den zweiten Einscannvorgang erhaltenen Bildes 2B, ein hierauf basierendes Erzeugen 5B eines zweiten, Signalverarbeitungsteilfunktionalitäten repräsentierenden Datensatzes DS2 und das Generieren 6B eines zweiten Zwischencodes ZC2 basierend auf dem erzeugten zweiten Datensatz DS2.

Hierzu sind in einer Bibliothek, oder einem Speicherbereich S.2 einer solchen Bibliothek bekannte grafische Darstellungen bzw. Symbole von auf dem zweiten Format basierenden und in deren Signalverarbeitungsteilfunktionalitäten dem Konfigurationsprogramm bekannte Funktionsbausteinen und zweckmäßig auch weiteren Bausteinen hinterlegt. Die oder auch mehrere solcher Bibliotheken kann bzw. können somit auf der Datenverarbeitungslage, auf welcher das Konfigurationsprogramm ausführbar sein oder auch auf einer weiteren externen Einrichtung sein und/oder als Programmdateien vorliegen, z.B. auf einem Speichermedium mit einem darauf gespeicherten Softwareprogramm, welches auf der Datenverarbeitungsanlage ausführbar und zum Zusammenwirken mit dem auf der Datenverarbeitungsanlage ausführbaren und eingerichteten Konfigurationsprogramm zur Durchführung des Verfahrens zumindest basierend auf den durch die Einscannvorgänge erhaltenen Bildern 2A, 2B einrichtbar ist. Zumindest während des in den Figuren 3 und 5 jeweils skizzierten Verfahrensabschnitts ist somit für dessen Durchführung, insbesondere computer- bzw. softwaregestützte Durchführung, zweckmäßig entsprechender Zugriff auf diese oder auch mehrere solcher Bibliotheken gegeben.

Folglich führt das Konfigurationsprogramm selbst oder ein anderes entsprechend eingerichtetes Programm, z.B. zweckmäßig das auf dem vorgenannten Speichermedium gespeicherte Softwareprogramm, im Rahmen jeder Bilderkennung 4A, 4B einen Vergleich mit in den in der Bibliothek S.2 abgelegten bekannten grafischen Darstellungen von auf dem zweiten Format basierenden und in deren Signalverarbeitungsteilfunktionalitäten dem Konfigurationsprogramm bekannten Funktionsbausteinen und zweckmäßig auch weiteren Bausteinen durch. Wird eine solche, in der Bibliothek S.2 abgelegte bekannte grafische Darstellung erkannt, wird die entsprechend dieser grafischen Darstellung bekannte Signalverarbeitungsteilfunktionalität für die auf der Bilderkennung basierenden Erzeugung 5A, 5B des jeweiligen Datensatzes DS1, DS2 herangezogen. Auch die Signalverarbeitungsteilfunktionalitäten können folglich zweckmäßig mit in der Bibliothek hinterlegt sein oder z.B. in Zusammenwirken mit dem Konfigurationsprogramm ermittelt werden und müssen also nicht unmittelbar aus der Bibliothek stammen, welches durch die beiden in den Figuren 3 und 5 jeweils gestrichelten, mit 5A bzw. 5B gekennzeichneten Pfeile angedeutet ist. Wesentlich ist lediglich insbesondere, dass die in der Bibliothek S.2 hinterlegten bekannten grafischen Darstellungen von auf dem zweiten Format basierenden Funktionsbausteinen und zweckmäßig auch weiteren Bausteinen eindeutig in deren jeweiliger Signalverarbeitungsteilfunktionalität sind. Folglich werden bei der Erkennung und dem hierauf basierenden Erzeugen eines jeweiligen Datensatzes DS1, DS2 in bevorzugter Weiterbildung auch die in den durch die Einscannvorgänge erhaltenen Bildern 2A, 2B enthaltenen Verknüpfungen zwischen auf dem zweiten Format basierenden Bausteinen mit ausgewertet.

Basierend auf dem so erzeugten ersten Datensatz DS1 und zweiten Datensatz DS2 wird dann jeweils ein erster bzw. zweiter Zwischencode ZC1, ZC2, insbesondere spezieller Maschinencode generiert.

Die bei vorstehend beschriebenen Verfahrensabschnitten erhaltenen Ergebnisse, d.h. die gemäß Figuren 3 und 5 generierten Zwischencodes ZC1 und ZC2 werden anschließend miteinander verglichen, d.h. insbesondere auf gegenseitige Identität geprüft, wie bei Fig. 6 mit dem mit Bezugszeichen 7 gekennzeichneten Doppelpfeil skizziert.

Die in den eingescannten Bildern 2A und 2B enthaltenen Informationen, insbesondere auch die darin enthaltene Signalverarbeitungsfunktionalität, zunächst durch die vorbeschriebene Erkennung und nachfolgende Datensatzerzeugung auszuwerten und anschließend, d.h. vor einem Vergleich, nochmals diese erzeugten Datensätze in einen jeweiligen Zwischencode zu wandeln und folglich erst diese Zwischencodes ZC1 und ZC2 miteinander zu vergleichen, bietet als einen wesentlichen Vorteil, dass ein solcher Vergleich bereits an und für sich auf Programmebene erfolgt und nicht lediglich allein auf optischer Grafikerkennung und/oder optisch identifizierten Baustein einschließlich der grafisch dargestellten (Teil-)Funktionalität. Mit anderen Worten müssen bereits zwei vom Grundsatz her für einen Prozessor ausführbare Codes für einen Identitätsvergleich vorliegen.

Sofern der Schritt des Vergleichens (vgl. Fig. 6, Bezugszeichen 7) zu dem Ergebnis führt, dass keine Identität des ersten Zwischencodes ZC1 und des zweiten Zwischencodes ZC2 vorliegt, wird zweckmäßig eine Fehlermeldung ausgegeben und das Verfahren beendet. Es kann dann erneut gestartet, z.B. auch durch erneutes zweimaligen Einscannen des Abbildes erneut gestartet werden.

Sofern der Schritt des Vergleichens (vgl. Fig. 6, Bezugszeichen 7) zu dem Ergebnis einer Identität des ersten Zwischencodes ZC1 und des zweiten Zwischencodes ZC2 führt, ist das Konfigurationsprogramm eingerichtet, jeweils wenigstens einen auf dem ersten Format basierenden Funktionsbaustein 1.1., 1.2, 1.3 für jeweils wenigstens eine bei der Erzeugung herangezogene bekannte Signalverarbeitungsteilfunktionalität automatisch auszuwählen, wie bei Fig. 7 auf der dort skizzierten Benutzeroberfläche B mit dem Bezugszeichen 8 angezeigt, und die Signalverarbeitungsfunktionalität auf der grafischen Benutzeroberfläche B grafisch darzustellen, wobei erkannte, auf dem zweiten Format basierende Funktionsbausteine 2.1, 2.2, 2.3, 2.4 und zweckmäßig auch erkannte, auf dem zweiten Format basierende weitere Bausteine, also insbesondere Anschlussbausteine 2.5, 2.6, 2.7, 2.8, 2.9, welche jeweilige an die Eingangsseite und Ausgangsseite der Signalverarbeitungsfunktionalität physikalische Schnittstellen in deren Funktion repräsentieren, durch entsprechend ausgewählte, auf dem ersten Format basierende Funktionsbausteine 1.1., 1.2, 1.3 und zweckmäßig auch durch entsprechend ausgewählte, auf dem ersten Format basierende weitere Bausteine, also insbesondere entsprechende Anschlussbausteine 1.5, 1.6, 1.7, 1.8, 1.9, 1.10, 1.11 ersetzt werden. Die auf dem ersten Format basierenden Funktionsbausteine und zweckmäßig auch weiteren Bausteine sind hierbei z.B. wiederum in einer Bibliothek, oder einem Speicherbereich S.1 einer solchen Bibliothek hinterlegt. Folglich werden bevorzugt auch nochmals beim Schritt des Auswählens 8 die in den durch die Einscannvorgänge erhaltenen Bildern 2A, 2B enthaltenen Verknüpfungen zwischen auf dem zweiten Format basierenden Bausteinen mit ausgewertet, um eine Eindeutigkeit bei der Auswahl zu gewährleisten.

Das Konfigurationsprogramm konstruiert folglich basierend auf den herangezogenen bekannten Signalverarbeitungsteilfunktionalitäten, d.h. also erkannten Signalverarbeitungsteilfunktionalitäten, unter Verwendung von auf dem ersten Format basierenden Funktionsbausteinen und zweckmäßig auch von auf dem ersten Format basierenden weiteren Bausteinen, die Signalverarbeitungsfunktionalität insgesamt neu. Wurden alle in den Bildern 2A und 2B enthaltenen, auf dem zweiten Format basierenden Funktionsbausteine und zweckmäßig auch weiteren Bausteine, also insbesondere Anschlussbausteine eindeutig erkannt, ergibt sich folglich die in der Funktionalität selbe, auf der grafischen Benutzeroberfläche B erzeugte Signalverarbeitungsfunktionalität, jedoch mit auf dem ersten Format anstelle von mit auf dem zweiten Format basierenden Bausteinen. Zweckmäßig werden demnach beim grafischen Darstellen der Signalverarbeitungsfunktionalität auf der grafischen Benutzeroberfläche B unter Verwendung der ausgewählten, auf dem ersten Format basierenden Funktionsbausteinen 1.1., 1.2, 1.3 auch deren jeweilige Signaleingänge und Signalausgänge entsprechend der jeweiligen, bei der Erzeugung herangezogenen bekannten Signalverarbeitungsteilfunktionalitäten automatisch mit einander verknüpft.

Zumindest die Information, welche Signalverarbeitungsteilfunktionalitäten erkannt worden und zweckmäßig, ob alle erkannt worden sind, liegen dem Konfigurationsprogramm somit im Ergebnis vor bzw. müssen diesem vom Programm, welches die Erkennung durchführt an die Hand gegeben werden. In bevorzugter Ausführung, wie auf der gemäß Fig. 7 skizzierten Benutzungsoberfläche B angedeutet, wird jedoch auch zumindest eines der mit den Einscannvorgängen erhaltenen Bilder 2A und 2B und/oder zumindest die hierin enthaltenen, auf dem zweiten Format basierenden Funktionsbausteinen und zweckmäßig auch weiteren Bausteine, dem Konfigurationsprogramm für den Schritt des Erzeugens bzw. des Neukonstruierens dem Konfigurationsprogramm zur Verfügung gestellt, d.h. insbesondere von dem Programm, welches die Erkennung durchführt.

Wie bei Fig. 7 ferner ersichtlich, liegt es auch im Rahmen der Erfindung, dass je nach spezifischen Formaten z.B. mehrere erkannte, auf dem zweiten Format basierende Bausteine, wie z.B. die Funktionsbausteine 2.3 und 2.4 (vgl. auch Fig. 1) durch einen einzigen ausgewählten, auf dem ersten Format basierenden Baustein ersetzt werden können, wie z.B. die Funktionsbausteine 2.3 und 2.4 (vgl. auch Fig. 1) durch den Funktionsbaustein 1.3. Entsprechend, d.h. ergänzend oder alternativ kann selbstverständlich auch ein erkannter, auf dem zweiten Format basierender Funktionsbaustein durch mehrere ausgewählte, auf dem ersten Format basierende Funktionsbausteine in der vom Konfigurationsprogramm grafischen dargestellten Signalverarbeitungsfunktionalität ersetzt werden.

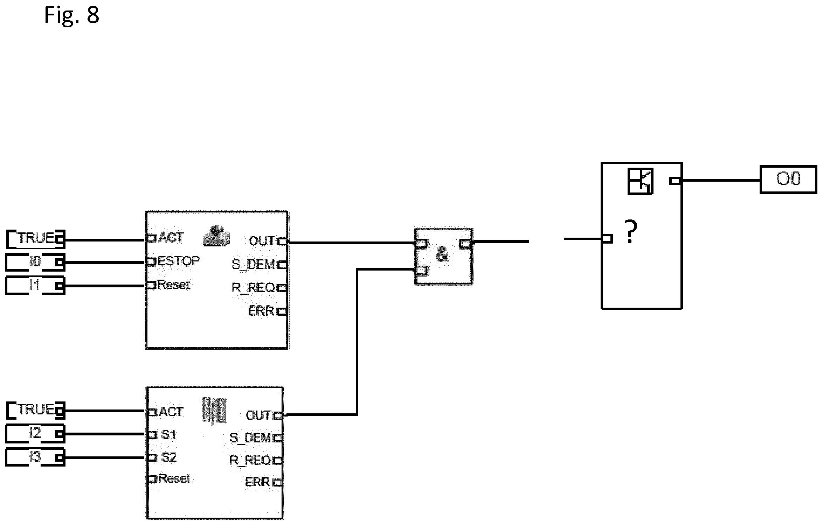

Insbesondere, für den Anwendungsfall, wenn die mit den Einscannvorgängen erhaltenen Bilder 2A und 2B, zumindest die hierin enthaltenen, auf dem zweiten Format basierenden Funktionsbausteine und zweckmäßig auch weiteren Bausteine dem Konfigurationsprogramm zur Verfügung gestellt werden, ist ferner im Rahmen der Erfindung vorgesehen, dass, wenn nicht alle auf dem zweiten Format basierenden Funktionsbausteine oder weiteren Bausteine bei der Bilderkennung durch Vergleich mit den in der Bibliothek S.2 abgelegten bekannten grafischen Darstellungen erkannt worden sind, ein solcher, auf dem zweiten Format basierender, nicht erkannter Funktionsbaustein oder weiterer Baustein bei der grafischen Darstellung der Signalverarbeitungsfunktionalität durch das Konfigurationsprogramm, mittels welchem erkannte, auf dem zweiten Format basierende Funktionsbausteine durch ausgewählte, auf dem ersten Format basierende Funktionsbausteine ersetzt werden, weiterhin dargestellt wird. Ein solches Beispiel ist in Fig. 8 skizziert. Hier ist beispielhaft der Funktionsbaustein 2.4 (vgl. auch Fig. 1) nicht erkannt worden und weiterhin in der unter Verwendung des Konfigurationsprogramms vorgenommen grafischen Darstellung der Signalverarbeitungsfunktionalität enthalten. Dies kann dem Anwender überdies in zweckmäßiger Weise angezeigt, z.B. grafisch hervorgehoben werden, wie bei Fig. 8 beispielhaft mit dem"?" verdeutlicht.

Besonders bevorzugt ist das Verfahren und also auch das Konfigurationsprogramm für einen solchen Fall dahingehend eingerichtet, dass jeder auf dem zweiten Format basierende, nicht erkannte Funktionsbaustein oder auch weitere Baustein mittels der grafischen Benutzeroberfläche nachträglich manipuliert, insbesondere durch wenigstens einen, von einem Benutzer ausgewählten, auf dem ersten Format basierenden Funktionsbaustein oder auch weiteren Baustein ersetzt werden kann.

Die unter Verwendung des Konfigurationsprogramms abschließend erzeugte, auf grafischen Benutzeroberfläche dargestellte Signalverarbeitungsfunktionalität und also auch die hierfür verwendete Mehrzahl von auf dem ersten Format basierenden Funktionsbausteinen mit jeweils zumindest einem Signaleingang und einem Signalausgang können folglich auch für die entsprechende Konfiguration der Steuerungseinrichtung herangezogen werden können. Entsprechendes gilt selbstverständlich für alle auf dem ersten Format basierenden weiteren Bausteine, welche gegebenenfalls beim Erzeugen der grafischen Darstellung dieser Signalverarbeitungsfunktionalität verwendet wurden. Die mittels des Konfigurationsprogramm abschließend erzeugte Signalverarbeitungsfunktionalität repräsentiert folglich auch das nach einer solchen zu erstellende und nach Konfiguration dann abzuarbeitende Anwendungsprogramm.

Mit anderen Worten, sind alle auf dem zweiten Format basierende Funktionsbausteine erkannt und durch ausgewählte, auf dem ersten Format basierende Funktionsbausteine ersetzt, oder nichterkannte entsprechend manipuliert, kann folglich ein lauffähiges Anwendungsprogramm erzeugt und dieses für die Konfiguration der Steuerungseinrichtung herangezogen werden.

Vorzugsweise wird jedoch, wenn alle auf dem zweiten Format basierenden Bausteine erkannt und ersetzt oder gegebenenfalls nachträglich auch manipuliert worden sind, die unter Verwendung der auf dem ersten Format basierenden Funktionsbausteine und gegebenenfalls weiteren Bausteinen grafisch dargestellte Signalverarbeitungsfunktionalität nochmals mittels des Konfigurationsprogrammes einer Plausibilitätsprüfung unterzogen. Führt auch die Plausibilitätsprüfung zu einem positiven Ergebnis, kann folglich auch die Konfiguration der Steuerungseinrichtung im Falle einer sicheren (safe) Anwendung wiederum als sicher (safe) angesehen werden.

## Patentansprüche

1. Verfahren zum Erzeugen einer grafischen Darstellung einer Signalverarbeitungsfunktionalität auf einer grafischen Benutzeroberfläche (B), und zwar unter Verwendung einer Mehrzahl von auf einem ersten Format basierenden Funktionsbausteinen (1.1., 1.2, 1.3) mit jeweils zumindest einem Signaleingang und einem Signalausgang zur Vorgabe jeweiliger Signalverarbeitungsteilfunktionalitäten, und zwar basierend auf einer Mehrzahl von auf einem zweiten Format basierenden Funktionsbausteinen (2.1, 2.2, 2.3, 2.4) mit jeweils zumindest einem Signaleingang und einem Signalausgang zur Vorgabe jeweiliger Signalverarbeitungsteilfunktionalitäten, wobei die auf dem ersten Format basierenden Funktionsbausteine bei der Konfiguration einer Steuerungseinrichtung mittels eines Konfigurationsprogramms zum Einsatz kommen können und das Konfigurationsprogramm auf einer Datenverarbeitungsanlage ausführbar ist und dazu eingerichtet ist, auf einer mit der Datenverarbeitungsanlage verbundenen Anzeigeeinrichtung diese grafische Benutzeroberfläche (B) darzustellen, auf welcher eine Mehrzahl von auf diesem ersten Format basierenden Funktionsbausteinen bereitgestellt werden und mittels der grafischen Benutzeroberfläche für die Konfiguration der Steuerungseinrichtung herangezogen werden können, umfassend die Schritte:
- Bereitstellen eines Abbildes einer grafischen Darstellung der Signalverarbeitungsfunktionalität mit einer Mehrzahl von auf dem zweiten Format basierenden Funktionsbausteinen (2.1, 2.2, 2.3, 2.4),
- optisches Einscannen (3A, 3B) dieses Abbildes , wobei ein erster optischer Einscannvorgang (3A) entlang einer ersten Einscannrichtung und ein zweiter optischer Einscannvorgang (3B) entlang einer zur ersten Einscannrichtung anderen, zweiten Einscannrichtung durchgeführt wird,
- Durchführen einer Bilderkennung (4A) des durch den ersten Einscannvorgang erhaltenen Bildes (2A) und hierauf basierendes Erzeugen (5A) eines ersten, Signalverarbeitungsteilfunktionalitäten repräsentierenden Datensatzes (DS1) sowie Durchführen einer Bilderkennung (4B) des durch den zweiten Einscannvorgang erhaltenen Bildes (2B) und hierauf basierendes Erzeugen (5B) eines zweiten, Signalverarbeitungsteilfunktionalitäten repräsentierenden Datensatzes (DS2), wobei bei jeder Bilderkennung (4A, 4B) ein Vergleich mit in einer Bibliothek (S.2) abgelegten bekannten grafischen Darstellungen von auf dem zweiten Format basierenden und in deren Signalverarbeitungsteilfunktionalitäten dem Konfigurationsprogramm bekannten Funktionsbausteinen durchgeführt wird und bei jedem Erkennen einer solchen, in der Bibliothek (S.2) abgelegten bekannten grafischen Darstellung, die entsprechend dieser grafischen Darstellung bekannte Signalverarbeitungsteilfunktionalität für die auf der Bilderkennung basierenden Erzeugung (5A, 5B) des jeweiligen Datensatzes (DS1, DS2) herangezogen wird,
- Generieren (6A) eines ersten Zwischencodes (ZC1) basierend auf dem erzeugten ersten Datensatz (DS1) und Generieren (6B) eines zweiten Zwischencodes (ZC2) basierend auf dem erzeugten zweiten Datensatz (DS2),
- Vergleichen (7) des ersten Zwischencodes (ZC1) mit dem zweiten Zwischencode (ZC2) und sofern der Schritt des Vergleichens zu dem Ergebnis einer Identität des ersten Zwischencodes und des zweiten Zwischencode führt, automatisches Auswählen (8) durch das Konfigurationsprogramm von jeweils wenigstens einem auf dem ersten Format basierenden Funktionsbaustein für jeweils wenigstens eine bei der Erzeugung herangezogene bekannte Signalverarbeitungsteilfunktionalität und grafisches Darstellen der Signalverarbeitungsfunktionalität auf der grafischen Benutzeroberfläche (B), wobei erkannte, auf dem zweiten Format basierende Funktionsbausteine durch ausgewählte, auf dem ersten Format basierende Funktionsbausteine ersetzt werden.

2. Verfahren nach Anspruch 1, wobei beim grafischen Darstellen der Signalverarbeitungsfunktionalität unter Verwendung der ausgewählten, auf dem ersten Format basierenden Funktionsbausteinen (1.1., 1.2, 1.3) Signaleingänge und Signalausgänge entsprechend der jeweiligen, bei der Erzeugung herangezogenen bekannten Signalverarbeitungsteilfunktionalitäten automatisch mit einander verknüpft werden.

3. Verfahren nach Anspruch 1 oder 2, wobei im Falle, dass nicht alle auf dem zweiten Format basierenden Funktionsbausteine bei der Bilderkennung durch Vergleich mit den in der Bibliothek (S1, S2) abgelegten bekannten grafischen Darstellungen erkannt werden, ein solcher, auf dem zweiten Format basierender, nicht erkannter Funktionsbaustein bei der grafischen Darstellung der Signalverarbeitungsfunktionalität, bei welcher erkannte, auf dem zweiten Format basierende Funktionsbausteine durch ausgewählte, auf dem ersten Format basierende Funktionsbausteine ersetzt werden, weiterhin dargestellt wird.

4. Verfahren nach Anspruch 3, wobei jeder auf dem zweiten Format basierende, nicht erkannte Funktionsbaustein mittels der grafischen Benutzeroberfläche nachträglich manipuliert, insbesondere durch wenigstens einen, von einem Benutzer ausgewählten, auf dem ersten Format basierenden Funktionsbaustein ersetzt werden kann.

5. Verfahren nach einem der vorstehenden Ansprüche, wobei ein erkannter, auf dem zweiten Format basierender Funktionsbaustein auch durch mehrere ausgewählte, auf dem ersten Format basierende Funktionsbausteine ersetzt werden kann und/oder mehrere erkannte, auf dem zweiten Format basierende Funktionsbausteine auch durch einen einzigen ausgewählten, auf dem ersten Format basierende Funktionsbausteine ersetzt werden können .

6. Verfahren nach einem der vorstehenden Ansprüche, wobei die unter Verwendung der auf dem ersten Format basierenden Funktionsbausteine grafisch dargestellte Signalverarbeitungsfunktionalität mittels des Konfigurationsprogrammes einer Plausibilitätsprüfung unterzogen wird.

7. Verfahren nach einem der vorstehenden Ansprüche, wobei das Abbild auch auf dem zweiten Format basierende Anschlussbausteine umfasst, welche jeweilige an die Eingangsseite und Ausgangsseite der Signalverarbeitungsfunktionalität physikalische Schnittstellen in deren Funktion repräsentieren, und auch diese entsprechend den auf dem zweiten Format basierenden Funktionsbausteinen bei der Bilderkennung (4A, 4B), dem hierauf basierenden Erzeugen (5A, 5B) eines jeweiligen Datensatzes (DS1, DS2) und dem automatischen Auswählen (8) ausgewertet und durch ausgewählte, auf dem ersten Format basierende Anschlussbausteine ersetzt werden.

8. Verfahren nach einem der vorstehenden Ansprüche, wobei in den durch die Einscannvorgänge erhaltenen Bildern (2A, 2B) enthaltene Verknüpfungen zwischen auf dem zweiten Format basierenden Bausteinen bei der Bilderkennung (4A, 4B), dem hierauf basierenden Erzeugen (5A, 5B) eines jeweiligen Datensatzes (DS1, DS2) und dem automatischen Auswählen (8) ausgewertet werden.

9. Speichermedium mit einem darauf gespeicherten Softwareprogramm, welches auf der Datenverarbeitungsanlage ausführbar und zur Durchführung des Verfahrens nach einem der vorstehenden Ansprüche in Zusammenwirken mit einem auf der Datenverarbeitungsanlage ausführbaren und eingerichteten Konfigurationsprogramm zumindest basierend auf den durch die Einscannvorgänge erhaltenen Bildern (2A, 2B) einrichtbar ist.

## Claims

1. A method for generating a graphical representation of a signal processing functionality on a graphical user interface (B) using a plurality of functional blocks (1.1., 1.2, 1.3) that are based on a first format, each having at least one signal input and one signal output, for specifying respective signal processing sub-functionalities based on a plurality of functional blocks (2.1, 2.2, 2.3, 2,4) that are based on a second format, each having at least one signal input and one signal output, for specifying respective signal processing sub-functionalities;
wherein the functional blocks that are based on the first format can be used when configuring a controller using a configuration program, and wherein the configuration program can be executed on a data processing system and is configured to display, on a display device connected to the data processing system, said graphical user interface (B) which provides a plurality of functional blocks based on said first format, which can be used for the configuration of the controller using the graphical user interface, comprising the steps of:
providing an image of a graphical representation of the signal processing functionality with a plurality of functional blocks (2.1, 2.2, 2.3, 2.4) that are based on the second format;
- optically scanning (3A, 3B) said image, with a first optical scanning process (3A) performed along a first scanning direction and a second optical scanning process (3B) performed along a second scanning direction that is different from the first scanning direction;
- performing an image recognition (4A) of the image (2A) obtained by the first scanning process and, based thereon, generating (5A) a first data set (DS1) representing signal processing sub-functionalities, and performing an image recognition (4B) of the image (2B) obtained by the second scanning process and, based thereon, generating (5B) a second data set (DS2) representing signal processing sub-functionalities, wherein each image recognition (4A, 4B) includes the performing of a comparison with known graphical representations of functional blocks that are based on the second format and are known to the configuration program in terms of their signal processing sub-functionalities and which are stored in a library (S.2), and wherein in each event of identifying such a known graphical representation stored in the library (S.2), the known signal processing sub-functionality corresponding to this graphical representation is used for the generation (5A, 5B) of the respective data set (DS1, DS2) based on the image recognition;
- generating (6A) a first intermediate code (ZC1) based on the generated first data set (DS1), and generating (68) a second intermediate code (ZC2) based on the generated second data set (DS2);
- comparing (7) the first intermediate code (ZC1) with the second intermediate code (ZC2) and, if the step of comparing leads to the result of an identity of the first intermediate code and the second intermediate code, automatically selecting (8), by the configuration program, at least one respective functional block that is based on the first format for at least one respective known signal processing sub-functionality used for the generating, and graphically displaying said signal processing functionality on the graphical user interface (B), wherein identified functional blocks that are based on the second format are replaced by selected functional blocks that are based on the first format.

2. The method according to claim 1, wherein in the graphical displaying of the signal processing functionality using the selected functional blocks (1.1., 1.2, 1.3) that are based on the first format, signal inputs and signal outputs are automatically linked to one another in accordance with the respective known signal processing sub-functionalities used for the generating.

3. The method according to claim 1 or 2, wherein in the case where not all of the functional blocks based on the second format are identified in the image recognition by comparison with the known graphical representations stored in the library (S1, S2), such a non-identified functional block that is based on the second format will continue to be displayed in the graphic display of the signal processing functionality, in which identified functional blocks that are based on the second format are replaced by selected functional blocks that are based on the first format.

4. The method according to claim 3, wherein each non-identified functional block that is based on the second format can subsequently be manipulated using the graphical user interface, in particular replaced by at least one functional block that is based on the first format and selected by a user.

5. The method according to any one of the preceding claims, wherein an identified functional block that is based on the second format can also be replaced by a plurality of selected functional blocks that are based on the first format, and/or wherein a plurality of identified functional blocks that are based on the second format can also be replaced by a single selected functional block that is based on the first format.

6. The method according to any one of the preceding claims, wherein the signal processing functionality graphically represented using the functional blocks that are based on the first format is subjected to a plausibility check by the configuration program.

7. The method according to any one of the preceding claims, wherein the image also comprises connecting blocks that are based on the second format, which represent functions of respective physical interfaces on the input side and output side of the signal processing functionality, and wherein in the image recognition (4A, 4B), in the generating (5A, 5B) of a respective data set (DS1, DS2) based thereon, and in the automatically selecting (8), these connecting blocks are also evaluated and replaced by selected connecting blocks that are based on the first format, similar to the functional blocks that are based on the second format.

8. The method according to any one of the preceding claims, wherein links between blocks that are based on the second format, which are included in the images (2A, 2B) obtained by the scanning processes, are evaluated in the image recognition (4A, 4B), in the generating (5A, 5B) of a respective data set (DS1, DS2) based thereon, and in the automatically selecting (8).

9. A storage medium with a software program stored thereon, which can be executed on the data processing system and which can be configured for performing the method according to any one of the preceding claims in cooperation with a configuration program that can be executed on the data processing system and configured at least based on the images (2A, 2B) obtained by the scanning processes.

## Revendications

1. Procédé de génération d'une représentation graphique d'une fonctionnalité de traitement de signaux sur une interface utilisateur graphique (B) à l'aide d'une pluralité de composants fonctionnels (1.1, 1.2, 1.3) basé sur un premier format, chacun avec une entrée de signal et une sortie de signal pour la spécification de fonctionnalités partielles de traitement de signaux respectives, sur la base d'une pluralité de composants fonctionnels (2.1, 2.2, 2.3, 2.4) basés sur un deuxième format, chacun avec une entrée de signal et une sortie de signal pour la spécification de fonctionnalités partielles de traitement de signaux respectives, où les composants fonctionnels basés sur le premier format peuvent être utilisés lors de la configuration d'un dispositif de commande au moyen d'un programme de configuration et le programme de configuration peut être exécuté sur une installation de traitement de données et est conçu pour représenter, sur un dispositif d'affichage relié avec l'installation de traitement de données, cette interface utilisateur graphique (B), sur laquelle une pluralité de composants fonctionnels basés sur ce premier format sont mis à disposition et peuvent être utilisés au moyen de l'interface utilisateur graphique pour la configuration du dispositif de commande, comprenant les étapes consistant en :
- la mise à disposition d'une image d'une représentation graphique de la fonctionnalité de traitement de signaux avec une pluralité de composants fonctionnels (2.1, 2.2, 2.3, 2.4) basés sur le deuxième format,
- balayage optique (3A, 3B) de cette image, où un premier processus de balayage optique (3A) est effectué le long d'une première direction de balayage et un deuxième processus de balayage optique (3B) est effectué le long d'une deuxième direction de balayage différente de la première direction de balayage,
- la réalisation d'une reconnaissance d'image (4A) de l'image (2A) obtenue grâce au premier processus de balayage (3A) et la production (5A), sur cette base, d'un premier ensemble de données (DS1) représentant des premières fonctionnalités partielles de traitement de signaux ainsi que la réalisation d'une reconnaissance d'image (4B) de l'image (2B) obtenue grâce au deuxième processus de balayage (3B) et la production (5B), sur cette base, d'un deuxième ensemble de données (DS2) représentant des deuxièmes fonctionnalités partielles de traitement de signaux, où, à chaque reconnaissance d'image (4A, 4B), une comparaison des composants basés sur le deuxième format et connus du programme de configuration dans leurs fonctionnalités partielles de traitement des signaux, est effectuée avec des représentations graphiques connues enregistrées dans une bibliothèque (S.2) et, à chaque reconnaissance d'une telle représentation graphiques connue enregistrée dans la bibliothèque (S.2), la fonctionnalité partielle de traitement de signaux connue selon cette représentation graphique est utilisée pour la production (5A, 5B), basée sur la reconnaissance d'image, de l'ensemble de données (DS1, DS2) correspondant,
- la génération (6A) d'un premier code intermédiaire (ZC1) sur la base du premier ensemble de données (DS1) produit et la génération (6B) d'un deuxième code intermédiaire (ZC2) sur la base du deuxième ensemble de données (DS2) produit,
- la comparaison (7) du premier code intermédiaire (ZC1) avec le deuxième code intermédiaire (ZC2) et, tant que l'étape de comparaison arrive au résultat d'une identité du premier code intermédiaire et du deuxième code intermédiaire, la sélection automatique (8) par le programme de configuration de respectivement au moins un composant fonctionnel basé sur le premier format pour respectivement au moins une fonctionnalité partielle de traitement de signaux connue utilisée lors de la production et représentation graphique de la fonctionnalité de traitement de signaux sur l'interface utilisateur graphique (B), où les composants fonctionnels reconnus basés sur le deuxième format sont remplacés par des composants fonctionnels sélectionnés basés sur le premier format.

2. Procédé selon la revendication 1, dans lequel, lors de la représentation graphique de la fonctionnalité de traitement de signaux à l'aide des composants fonctionnels (1.1, 1.2, 1.3) basés sur le premier format sélectionnés, des entrées de signaux et des sorties de signaux sont automatiquement combinées entre elles lors de la production de fonctionnalités partielles de traitement de signaux connues respectives.

3. Procédé selon la revendication 1 ou 2, dans lequel, dans le cas où tous les composants fonctionnels basés sur le deuxième format sont reconnus lors de la reconnaissance d'image à l'aide de la comparaison avec les représentations graphiques connues enregistrées dans la bibliothèque (S1, S2), un tel composant fonctionnel, basé sur le deuxième format, non reconnu, continue d'être représenté, lors de la représentation graphique de la fonctionnalité partielle de traitement de signaux, dans laquelle les composants fonctionnels reconnus basés sur le deuxième format sont remplacés par des composants fonctionnels sélectionnés basés sur le premier format.

4. Procédé selon la revendication 3, dans lequel chaque composant fonctionnel non reconnu basé sur le deuxième format peut être manipulé ultérieurement au moyen de l'interface utilisateur graphique, plus particulièrement peut être remplacé par au moins un composant fonctionnel, basé sur le premier format, sélectionné par un utilisateur.

5. Procédé selon l'une des revendications précédentes, dans lequel un composant fonctionnel reconnu basé sur le deuxième format peut également être remplacé par plusieurs composants fonctionnels sélectionnés basés sur le premier format et/ou plusieurs composants fonctionnels reconnus basés sur le deuxième format peuvent également être remplacés par un seul composant fonctionnel sélectionné basé sur le premier format.

6. Procédé selon l'une des revendications précédentes, dans lequel la fonctionnalité de traitement de signaux représentée graphiquement à l'aide des composants fonctionnels basés sur le premier format est soumise à un contrôle de plausibilité au moyen du programme de configuration.

7. Procédé selon l'une des revendications précédentes, dans lequel l'image comprend également des composants de raccordement basés sur le deuxième format, qui représentent respectivement des interfaces physiques sur les côtés d'entrée et de sortie de la fonctionnalité de traitement de signaux dans leur fonction et ceux-ci sont analysés en fonction des composants fonctionnels basés sur le deuxième format lors de la reconnaissance d'image (4A, 4B), de la production (5A, 5B), basée sur celle-ci, de l'ensemble de données (DS1, DS2) respectif et de la sélection automatique (8) et remplacés par des composants de raccordement basés sur le premier format sélectionnés.

8. Procédé selon l'une des revendications précédentes, dans lequel les combinaisons contenues dans les images (2A, 2B), obtenues à l'aide des processus de balayage, entre les composants fonctionnels basés sur le deuxième format sont analysées lors de la reconnaissance d'image (4A, 4B), de la production (5A, 5B) basée sur celle-ci d'un ensemble de données (DS1, DS2) respectif et de la sélection automatique (8) .

9. Support de stockage avec un programme logiciel enregistré sur celui-ci, qui est exécutable sur l'installation de traitement de données et peut être mis en œuvre pour l'exécution du procédé selon l'une des revendications précédentes en interaction avec un programme de configuration qui peut exécuté et configuré sur l'installation de traitement de signaux au moins sur la base des images (2A, 2B) obtenues à l'aide des processus de balayage.
